# EUROPEAN PATENT APPLICATION

(11) **EP 1 430 768 A1**
(43) Date of publication of application: **23.06.2004**
(21) Application number: 02028459.2
(22) Date of filing: 19.12.2002
(51) Int. Cl.: A01G 1/08, A01G 25/02

(54) **Boundary and irrigating kerb for lawns and similar sites**

(71) Applicant: Del Ben, Ivo, 33088 Tiezzo, PN (IT); Cover, Giorgio, 31045 Oberzo, TV (IT)
(72) Inventor: Del Ben, Ivo, 33088 Tiezzo, PN (IT)
(74) Representative: Dalla Rosa, Adriano

(57) **Abstract**

Boundering and irrigating sectional kerb for lawns and similar sites, adapted to be arranged preferably along the peripheral edges of such lawns and cultivated sites. Kerb comprising a plurality of component elements (12) made of plastic material, combined and joined removably to each other with different and variable combinations and configurations. Such component elements (12) are each constituted by means (19) for securing to the ground, means (16) for housing at least an irrigating water conduit (24), means (27, 28, 32) for connecting to the water supply system and means (22, 23) to fit the component elements (12) adjacent thereto with different and variable configurations.

## Description

The invention relates to a boundering and irrigating sectional kerb for lawns and similar sites, constituted by a plurality of component elements adaptable from each other with different compositions and shapes, depending on the configuration of the perimeter to be bounded, said component elements being also provided for irrigating the same lawns.

At the present time, the lawns and similar sites in which the grass and cultivations of various kind are sown, are irrigated manually or automatically by means of suitable per se known movable irrigating plants, which are arranged on the areas to be irrigated and connected to the water plant, while the grass and the cultivations are shaved from time to time by utilizing adequate gardening tools. Therefore, besides requiring the availability of the irrigating plants and the conventional gardening tools, these operations are performed also with a considerable shaving care and accuracy, particularly along the peripheral edges, to provide for an effective and satisfactory cutting and shaving of the existing grass and various cultivations, which circumstance isn't always possible to be satisfied owing to the different and variable configurations of the lawns. Therefore, it would be advisable, and is the object of the present invention, to conciliate widely the need to use a reduced number of appliances for performing these functions and that to be able to shave the lawn edges in an extremely satisfactory manner, by means of the use of the kerb according to the invention, adapted to bound partially or fully the lawn peripheral edge and to permit a perfect shaving and cutting along the same edges to be obtained, as well as to irrigate the lawns and cultivations situated near the same kerb. This kerb is made with the constructive characteristics substantially described and claimed with the enclosed claims.

The invention will be better understood from the following description, given solely by way of not-limiting example and with reference to the accompanying drawings wherein:
- Fig. 1 shows a front view of a kerb portion according to the invention, on a first embodiment thereof ;
- Fig. 2 shows a plan view of the kerb portion of Fig. 1 ;
- Fig. 3 shows a cutaway side view of the kerb portion of Fig. 1 ;
- Fig. 4 shows a front view of a kerb portion according to the invention, on a second embodiment thereof ;
- Fig. 5 shows a plan view of the kerb portion of Fig. 4 ;
- Fig. 6 shows a cutaway side view of the kerb portion of Fig. 4 ;
- Fig. 7 shows a front view of a kerb portion according to the invention, on a third embodiment thereof ;
- Fig. 8 shows a plan view of the kerb portion of Fig. 7 ;
- Fig. 9 shows a cutaway side view of the kerb portion of Fig. 7 ;
- Fig. 10 shows a possible configuration of the kerb according to the invention.

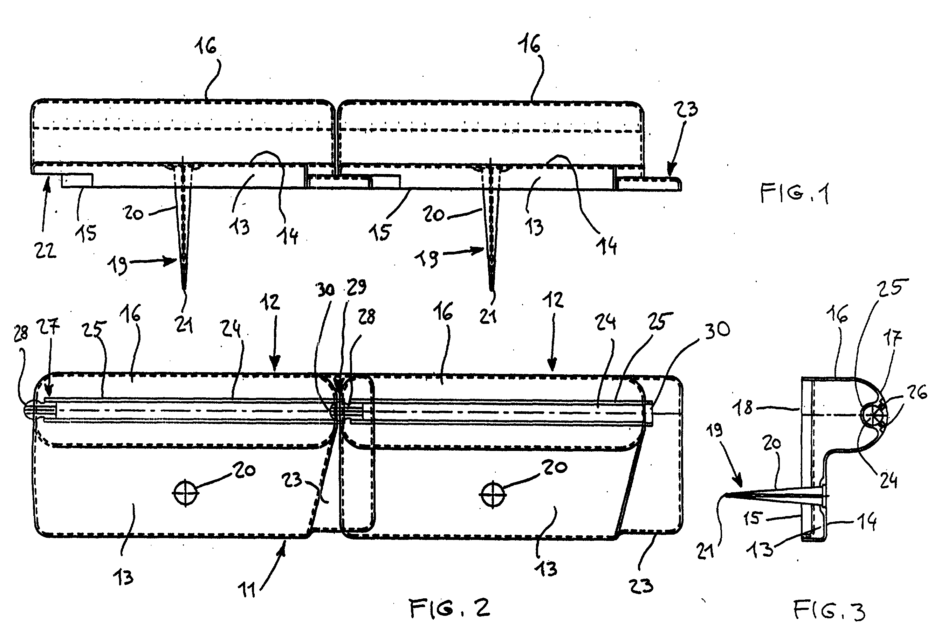

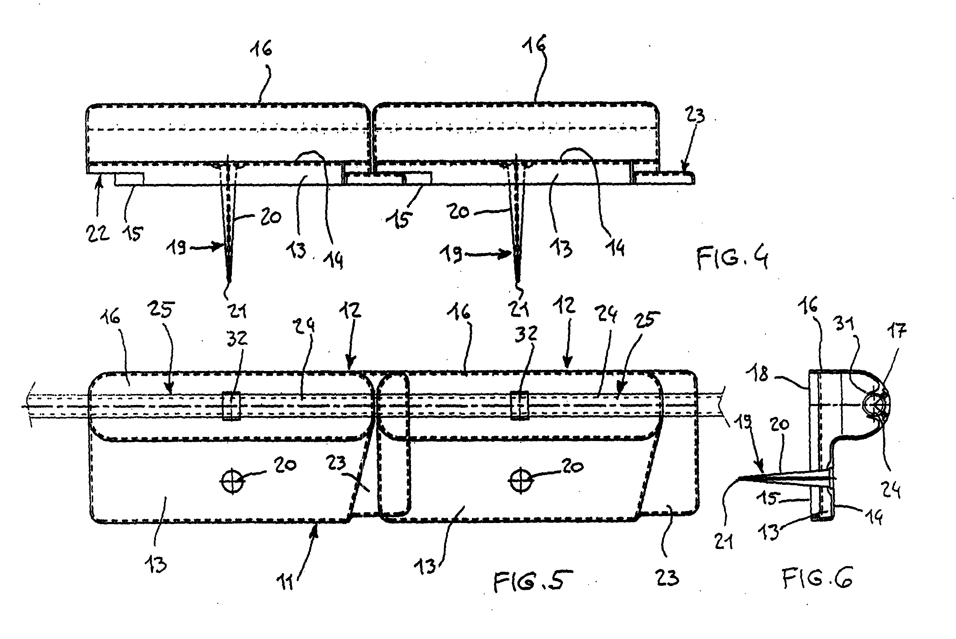

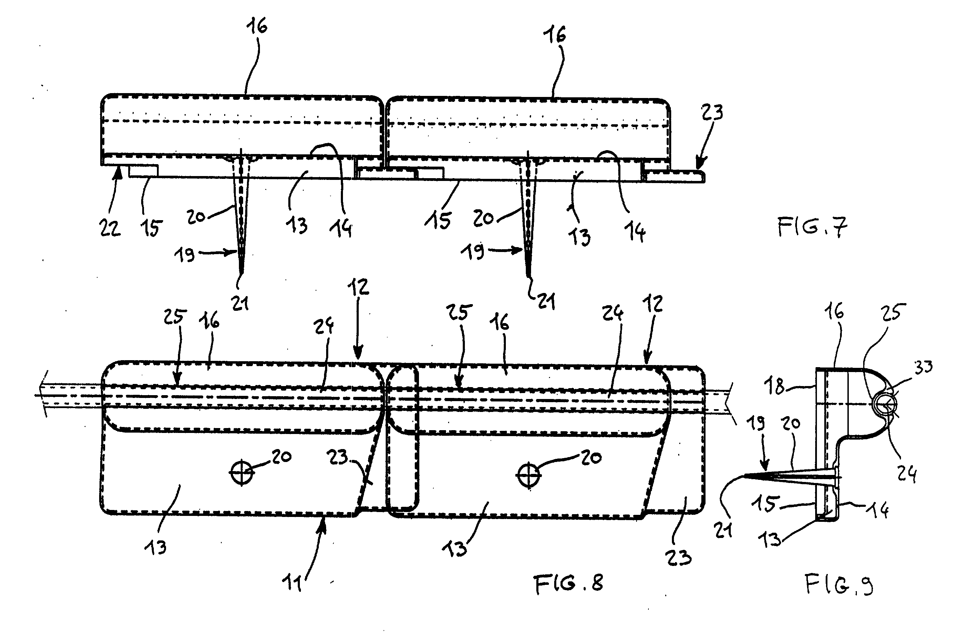

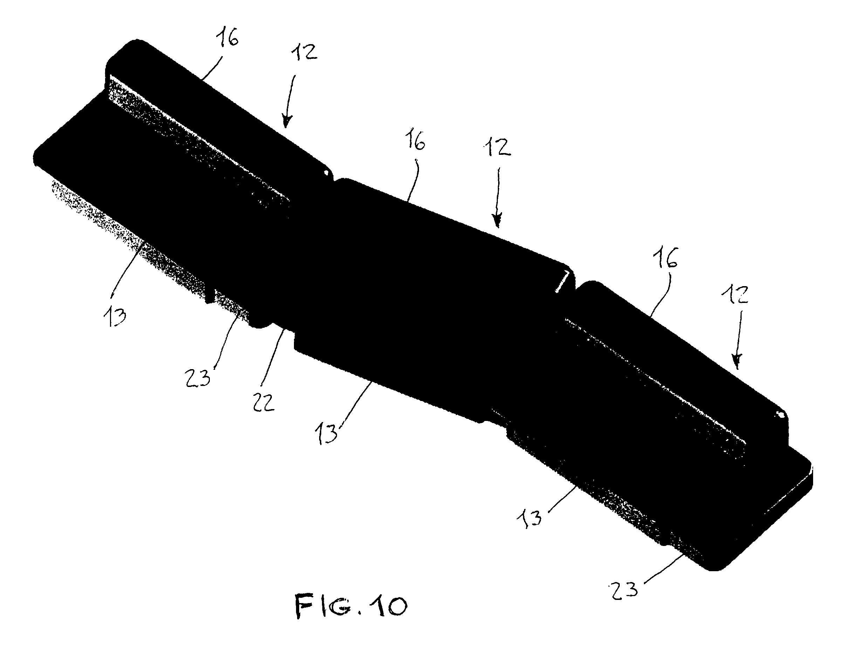

The above mentioned Figures schematically represent a kerb 11 according to the invention, adapted to be installed removably on the lawns and similar sites provided with cultivations of various kind, preferably along the peripheral edges of such lawns, which kerb is adapted both to bound such peripheral edges and to provide for irrigating the lawns and cultivations as well as to permit such lawns and cultivations to be shaved periodically. This kerb is substantially constituted by a plurality of sectional elements made of plastic material, which are combined and joined removably from each other, as well as secured temporarily on the ground with different and variable combinations and configurations thereof, depending on the wideness, shape and size of each lawn or cultivated site to be irrigated and shaved. Turning now to the Figs. 1-3, in which two component elements 12 identical and joined removably to each other are represented, which form a kerb portion, it is noted that each component element is shaped substantially with a horizontal rectilinear portion 13 having limited thickness, whose upper flat surface 14 and lower flat surface 15 are designed respectively to act as an edge boundering the lawn and cultivations area and to be laid on to the ground, and with a raised portion 16 joined laterally to the horizontal surface 13 and having a height larger than this latter, as well as bounded by an upper flat surface 17 and a lower flat surface 18, forming an extension of the lower surface 15 and assigned to be laid on to the ground. In turn, the horizontal rectilinear portion 13 is provided with at least a fixing element 19 adapted to be introduced into the ground so as to provide for fixing on position each kerb component element, and in the present example this fixing element is constituted by a sharpened shank 20 having adequate lenght, made integral with the rectilinear portion 13 or joined adequately thereto, centrally and orthogonally thereto, and projected beyond the lower surface 15 thereof, and turned with its tip 21 toward the ground. Besides, such rectilinear portion is shaped at its side end portions with a thined form, so as to fit on different positions corresponding rectilinear portions of further kerb component elements arranged adjacent thereto, thereby forming a continuous kerb with different and variable configurations. In the present example, the side end portions of such rectilinear portion are shaped respectively with a hollowed zone 22 and 23 with almost triangular shape, and having the same thickness, provided respectively on the lower surface 15 and the upper surface 14 of such rectilinear portion, in a manner to fit corresponding hollowed zones of the rectilinear portions of the kerb component elements respectively adjacent thereto, thereby providing for an articulated kerb such as for example that represented on Fig. 10. The raised portion 16 of each component element is internally hollowed for the entire lenght thereof, so as to house at least a rectilinear conduit 24 made of plastic material for water passage, through which irrigating water is passed, and which is shaped for being joined at its end portions with further conduits of the same kind, housed into the adjacent component elements forming the kerb. In the example illustrated by the Figures referred to, the conduit 24 is housed on a corresponding hollowed seat 25 provided on the outer upper surface of the raised portion 16 and is provided with weakened zones namely having smaller wall thickness, provided spaced from each other along its lenght, in order to break manually such weakened zones on the desired positions, thereby obtaining some holes for irrigating water passage. From Fig. 3 it is noted by way of example that the conduit 24 is provided with through holes 26 offset angularly from each other for irrigating water passage, and such holes may of course be made also with different shapes, arrangements and sizes for the scope set forth, thus without departing from the protection sphere of the present invention. Likewise, the water supply conduit may be housed internally the raised portion 16 also on different positions than that described by way of example only, and anyway it is preferred that such conduit be always maintained secured on its installation position, so as to ensure an effective and satisfactory irrigation of the lawns and cultivations. Moreover, the conduit 24 of each component element is so shaped at its end portions as to be able to be joined in a simple and quick manner with the corresponding end portions of the conduits of the adjacent component elements, and this connection is effected preferably by means of removable couplings between the adjacent end portions of the different conduits. In particular, from Figs. 1-3 there are noted two component elements joined with each other, of which each conduit 24 is provided at its one end portion with a joint 27 having a projected head 28 with circular shape and at the other its end portion with a hollowed joint 29, whose cavity 30 is shaped with the same form of the circular head, so as to be able to be restrained with the corresponding projected head 28 of the respectively adjacent joint. The so realized kerb may be disposed easily and quickly on the desired positions preferably along the peripheral edge of the lawns and cultivations, by securing on to the ground each component element with its sharpened shank 20 and joining together the end portions opposite from each other of the conduits 24, whose irrigating through holes 26 have been opened on the desired positions, which conduits are then connected to a water supply system for passing water therethrough, and the component elements finally are displaced with different arrangements, while sliding adequately from each other the corresponding hollowed zones 22 and 23, thereby obtaining a continuous kerb having the same pattern of the peripheral edge of the lawns and cultivations to be shaved and irrigated, performing the irrigating function. In this way, on to the upper flat surface 17 of the rectilinear portions 13 of the different component elements of the kerb according to the invention it may be passed a suitable gardening tool like a lawn shaving apparatus, in order to cut and shave perfectly the grass and the cultivations along the peripheral edges of such lawns and cultivations. Additional possible embodiments of the present kerb are described by way of example in the remaining Figures, in which it is noted that in all these cases the component elements of the kerb are always made with the same structural configuration of the previously described ones. In particular, from Figs. 4-6 it is noted that the housing seat 25 is bored for a portion of its bottom side 31, while the different conduits 24 are made with flat end portions which are joined together by means of sleeves 32. From Figs. 7-9 it is noted that the housing seat 25 is bored for a portion of its upper wall 33, in a way that the conduit 24 is slightly projected outward, while the different conduits are replaced by a single flexible conduit formed by the conventional separated irrigating conduit. Obviously, also in this case it is possible to perform the irrigating operation with more separated conduits joined together with couplings of different kind than those indicated by way of example only, in order to obtain always the same functions, thus without departing from the protection sphere of the present invention. Furthermore, the present kerb may be shaped for housing also electric conductors or electric cables providing a supply voltage to one or more lighting lamps or lighting devices of various kind, fitted on different positions along the same kerb.

## Claims

1. Boundering and irrigating sectional kerb for lawns and similar sites, adapted to be arranged preferably along the peripheral edges of such lawns and cultivated sites, **characterized by** a plurality of component elements (12) made of plastic material, which are combined and joined removably from each other with different and variable combinations and configurations, depending on the wideness, shape and size of each lawn and cultivation, said component elements (12) being shaped with means (19) for securing to the ground, means (16) for housing at least an irrigating water conduit (24), and means (27, 28, 32) for connecting to the water supply system, and means (22, 23) to fit the component elements (12) adjacent thereto with different and variable configurations.

2. Kerb according to claim 1, **characterized in that** said component elements (12) are constituted each by a horizontal rectilinear portion (13) to be laid on to the ground, for passing onto it the gardening tool for cutting and shaving the lawn or cultivated site, and by a raised portion (16) forming said housing means, having a height larger than said rectilinear portion (13), joined laterally therewith and laid on to the ground, as well as so shaped as to house said supply conduit (24).

3. Kerb according to claim 2, **characterized in that** said securing means (19) comprise at least a sharpened shank (20) joined with said rectilinear portion (13), orthogonally thereto, projected beyond it and provided with a tip (21) turned toward the ground so as to be introduced into this latter.

4. Kerb according to claim 2, **characterized in that** said conduit (24) is made with weakened zones provided spaced away from each other along its length, and adapted to be opened so as to define through holes (26) for irrigating water passage.

5. Kerb according to claim 2, **characterized in that** said connecting means comprise removable couplings provided at the end portions of said conduit (24).

6. Kerb according to claim 5, **characterized in that** said couplings comprise a joint (27) having a projected head (28) at one end portion of said conduit (24) and a hollowed joint (29) at the other end portion of said conduit (24), whose cavity (30) is shaped with the same form of said joint with projected head (27) so as to be able to be coupled therewith.

7. Kerb according to claim 5, **characterized in that** said couplings comprise a sleeve (32) to join the opposed flat end portions of two adjacent conduits (24).

8. Kerb according to claim 2, **characterized in that** said fitting means comprise a first and a second hollowed zone (22, 23) having an almost triangular shape, provided by making thin the end portions of said rectilinear portion (13) respectively on the lower surface (15) and the upper surface (14) thereof, said first and second hollowed zone (22, 23) being able to fit corresponding hollowed zones of the rectilinear portions (13) of respectively adjacent component elements.
